# EUROPÄISCHE PATENTSCHRIFT

(11) **EP 1 377 409 B1**
(45) Veröffentlichungstag und Bekanntmachung des Hinweises auf die Patenterteilung: **09.03.2005**
(21) Anmeldenummer: 02766617.1
(22) Anmeldetag: 03.04.2002
(51) Int. Cl.: B23Q 3/157

(54) **WERKZEUGMASCHINE MIT WERKZEUGSPINDEL UND WERKZEUGWECHSLER**
MACHINE TOOL COMPRISING A TOOL SPINDLE AND A TOOL CHANGER
MACHINE-OUTIL POURVUE D'UNE BROCHE PORTE-OUTIL ET D'UN CHANGEUR D'OUTIL

(30) Priorität: 12.04.2001 DE 10118595
(43) Veröffentlichungstag der Anmeldung: 07.01.2004
(73) Patentinhaber: Deckel Maho Seebach GmbH, 99846 Seebach (DE)
(72) Erfinder: LASCH, Thorsten, 99880 Aspach (DE)
(74) Vertreter: Elbertzhagen, Otto, Dipl.-Ing.
(86) Internationale Anmeldenummer: PCT/EP2002/003710
(87) Internationale Veröffentlichungsnummer: WO 2002/087820

(56) Entgegenhaltungen:
- DE-A- 4 406 386
- DE-A- 19 600 055
- FR-A- 2 328 634
- US-A- 5 451 196

## Beschreibung

### TECHNISCHES GEBIET

Die Erfindung betrifft eine Werkzeugmaschine nach dem Oberbegriff des Patentanspruchs 1.

### STAND DER TECHNIK

Eine Werkzeugmaschine der als bekannt vorausgesetzten Art (DE 196 00 055 A1) weist einen Werkzeugwechsler mit über Kreuzgelenke miteinander zu einem Gelenkviereck verbundenen Längs- und Querstäben auf, wobei die Längsstäbe um parallel zueinander verlaufende Achsen gekoppelt antreibbar sind. Die bekannte Lösung erfordert einen relativ großen Bauraum, der in vielen Fällen wegen der engen Nachbarschaft zur Werkzeugspindel nicht vorhanden ist. Außerdem ist bei der bekannten vielteiligen Lösung eine befriedigende Stabilität nur bei massiver Gestaltung erzielbar. Das damit einhergehende hohe Gewicht begrenzt die erzielbare Wechselgeschwindigkeit.

Es ist ferner eine Einrichtung zum Transport eines Werkzeuges bekannt (DE 44 06 386 A1), welche eine mit einem Motor verbundene Schnecke aufweist, die auf einem feststehenden Schneckenrad abwälzt. Die erste Schnecke ist mit einer zweiten Schnecke gleichen Übersetzungsverhältnisses treibend verbunden. Die zweite Schnecke ist mit einem das Werkzeug tragenden Schneckenrad verbunden. Zwischen den beiden Schneckentrieben ist ein mit einer Kupplung versehenes Getriebe angeordnet. Das Vorsehen von Schneckentrieben beschränkt die Verlagerungsgeschwindigkeit des Werkzeugs.

### DIE ERFINDUNG

Ausgehend von diesem Stand der Technik liegt der Erfindung die Aufgabe zugrunde, eine Werkzeugmaschine der als bekannt vorausgesetzten Art zu schaffen, die einen platzsparenden, stabilen und schnellen Werkzeugwechsler aufweist.

Die Lösung dieser Aufgabe erfolgt mit den Merkmalen des Patentanspruchs 1.

Die Bauelemente weisen eine vergleichsweise geringe Masse auf, so daß der Werkzeugwechsler schnell schalten kann. Es ist nur ein drehbares Tragelement vorgesehen, an dem die Greifer gelagert und in ihrer unveränderlichen Ausrichtung geführt werden.

Bevorzugte Ausgestaltungen der Erfindung ergeben sich aus den Unteransprüchen.

### KURZBESCHREIBUNG DER ZEICHNUNGSABBILDUNG

Nachstehend werden zwei bevorzugte Ausführungsformen der Erfindung anhand der Zeichnungen im einzelnen beschrieben.
Es zeigen:
- Figur 1 -: eine perspektivische Ansicht einer Werkzeugspindel einer einspindligen Werkzeugmaschine in vereinfachter Darstellung mit einem Werkzeugwechsler in einer ersten Ausführungsform;
- Figur 2 -: eine schematische Seitenansicht der Werkzeugspindel und des Werkzeugwechslers nach Fig. 1 teilweise im Schnitt;
- Figur 3 -: eine Draufsicht auf den Werkzeugwechsler gemäß Fig. 1;
- Figur 4 -: eine perspektivische Ansicht eines schematisch dargestellten Werkzeugwechslers in einer zweiten Ausführungsform für eine zweispindlige Werkzeugmaschine.

### BESTER WEG ZUR AUSFÜHRUNG DER ERFINDUNG

In den Zeichnungen sind gleiche oder einander entsprechende Teile jeweils mit gleichen Bezugszeichen versehen, die sich im Bedarfsfall lediglich durch Hochstriche voneinander unterscheiden.

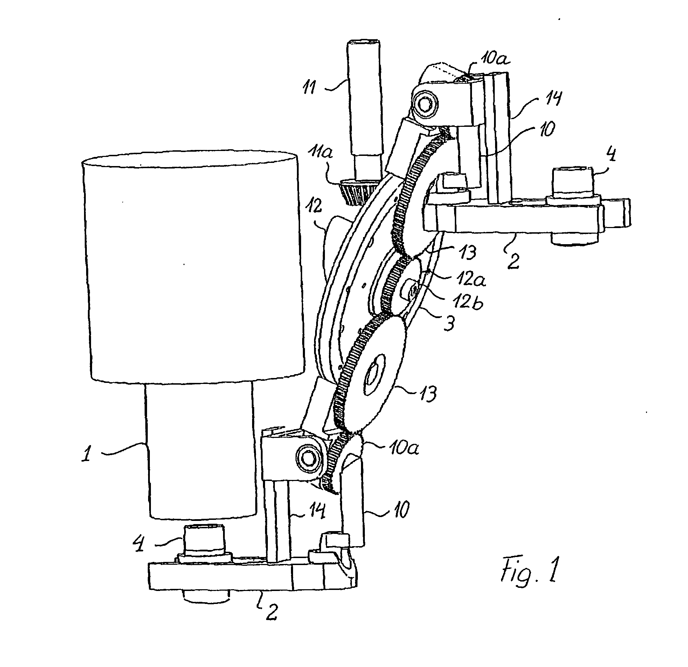

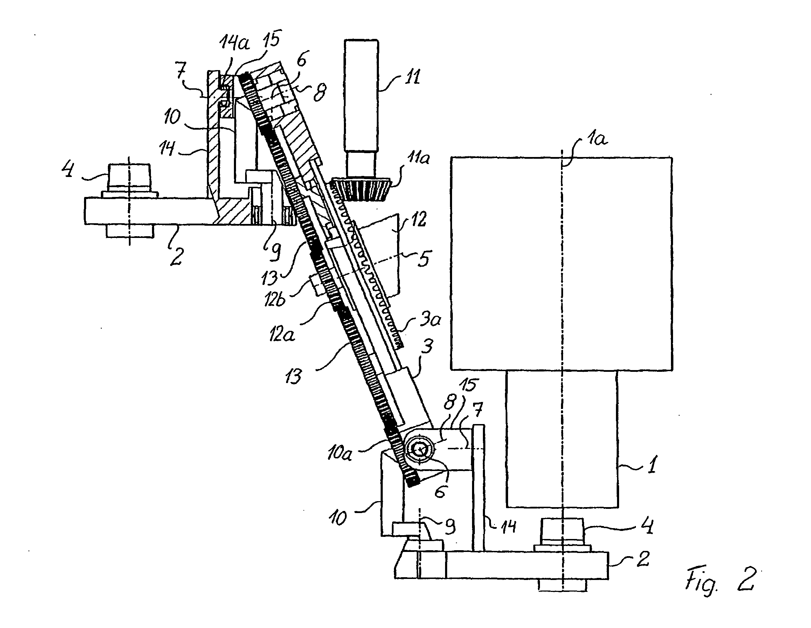

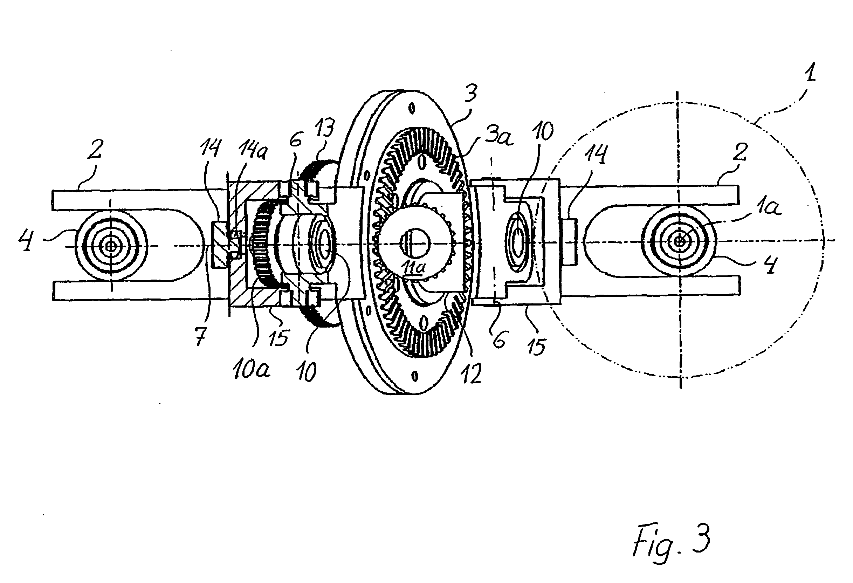

### Zunächst zu Figuren 1 bis 3:

Von einer Werkzeugmaschine ist in den Zeichnungen nur eine Werkzeugspindel 1 dargestellt, die um eine vertikale Spindelachse 1a rotierend antreibbar ist. Die Werkzeugspindel 1 ist mindestens in Richtung der Spindelachse 1a verschieblich geführt. An ihrem unteren Ende weist die Werkzeugspindel 1 eine bekannte, nicht dargestellte Spannvorrichtung auf, in die Werkzeughalter 4 einspannbar sind.

Mit einem nicht dargestellten, die Werkzeugspindel 1 lagernden Spindelkasten ist ein vertikal verschiebbares Gehäuse 12 mit einem Zapfen 12b fest verbunden, auf dem ein Tragelement 3 um eine Schwenkachse 5 verschwenkbar gelagert ist. Die Schwenkachse 5 verläuft geneigt zur Spindelachse 1a. Auf dem Zapfen 12b ist ein Zahnrad 12a ortsfest und undrehbar angeordnet. Das Tragelement 3 wird über ein kegeliges Antriebszahnrad 3a, das mit dem Tragelement 3 fest verbunden ist, angetrieben. Der Antrieb erfolgt über ein fest mit einer Antriebswelle 11 verbundenes Ritzel 11a, das mit dem Antriebszahnrad 3a kämmt.

An dem Tragelement 3 sind einander diametral gegenüberliegend zwei Greifer 2 gelagert, die die Werkzeughalter 4 an ihrem Außenumfang umfassen und die jeweils an einem Halteelement 14 befestigt sind. Das Halteelement 14 ist gegenüber dem Tragelement 3 um zwei rechtwinklig zueinander verlaufende Achsen 6 und 7 verschwenkbar. Die Achse 7 wird von einem Lagerzapfen 14a am Halteelement 14 gebildet, der in einem Bügel 15 drehbar gelagert ist. Der Bügel 15 umgreift ein Zahnrad 10a und ist seinerseits um die Achse 6 verschwenkbar am Tragelement 3 gelagert.

Das Zahnrad 10a ist fest mit einem Führungsorgan 10 verbunden, das in dem Tragelement 3 um eine zur Schwenkachse 5 parallel verlaufende, erste Achse 8 drehbar gelagert ist. Das Zahnrad 10a greift in ein Zwischenrad 13, das an dem Tragelement 3 drehbar gelagert ist und das mit dem zentralen Zahnrad 12a kämmt. Während des Verschwenkens des Tragelements 3 wälzt sich das Zwischenrad 13 auf dem zentralen Zahnrad 12a ab. Das Übersetzungsverhältnis zwischen zentralem Zahnrad 12a und dem mit dem Führungsorgan 10 verbundenen Zahnrad 10a beträgt 1:1. Für die beiden Greifer 2 des Transportmechanismus sind zwei Zwischenräder 13 vorgesehen.

Das Führungsorgan 10 ist im Anschluss an seinen Lagerzapfenbereich, der im Tragelement 3 gelagert ist und der auch das Zahnrad 10a trägt, in einem ersten Bereich senkrecht nach unten abgewinkelt. An seinem dem Lagerzapfenbereich gegenüberliegendes Ende ist das Führungsorgan 10 kurbelartig gekröpft und bildet einen Zapfen, der in einem Lager des Greifers 2 drehbar gelagert ist.

Während der Schwenkbewegung des Tragelements 3 wird das Führungsorgan 10 um gleiche Winkelbeträge in entgegengesetzter Richtung verschwenkt. Dadurch behält der an den Lagerzapfenbereich anschließende Bereich des Führungsorgans 10 stets seine senkrechte Ausrichtung. Auf diese Weise verschwenkt der Greifer 2 aus der einem nicht dargestellten Magazin zugewandten, oberen Lage in eine untere, der Werkstückspindel 1 zugewandte Lage, in der ein Werkzeughalter 4 von der Werkstückspindel 1 durch Verschiebung in Richtung der Spindelachse 1a aufgenommen werden kann. Die Greifer 2 sind während des Verschwenkens parallel zu sich selbst ausgerichtet.

Für einen Werkzeugwechsel wird ein zuvor benutzter Werkzeughalter 4 von einem der Greifer 2 aus der Werkzeugspindel 1 und ein Werkzeughalter 4 mit einem neuen Werkzeug von dem anderen Greifer 2 aus dem Magazin übernommen. Nach dem Verschwenken um 180° befindet sich der Werkzeughalter 4 mit dem neuen Werkzeug in der Aufnahmeposition unter der Werkzeugspindel 1 und das gebrauchte Werkzeug in der Magazinierposition.

Eine vertikale Hubbewegung des gesamten Mechanismus, die für das Ein- bzw. Ausheben an Spindel bzw. Magazinierposition vorgenommen wird, erfolgt separat.

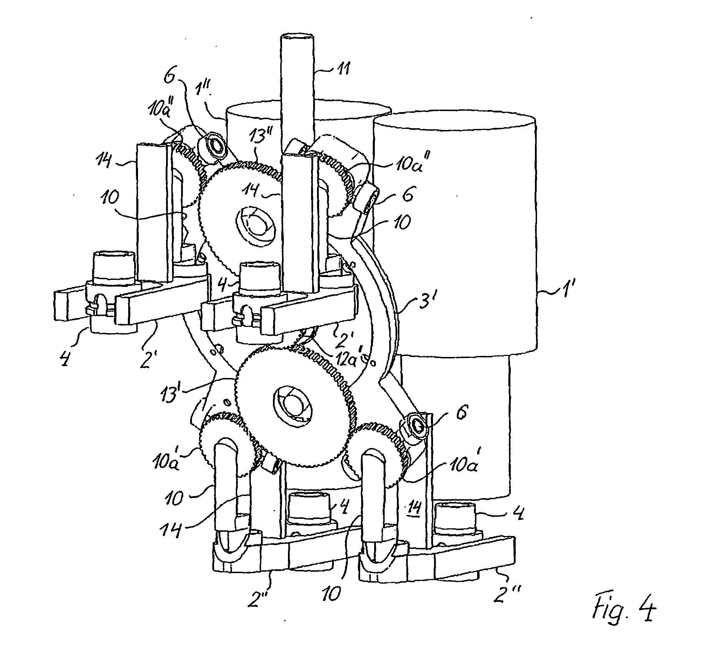

### Nun zur Ausführung gemäß Figur 4:

Das beschriebene Wechselverfahren für Werkzeuge oder Werkzeughalter 4 kann in dieser zweiten Ausführungsform auch bei einer Werkzeugmaschine mit zwei parallel verlaufenden Werkzeugspindeln 1' und 1" angewandt werden. Der Werkzeugwechsler weist ein Tragelement 3' auf, an dem vier Greifer 2' bzw. 2" gelagert sind. Jeweils ein Zwischenrad 13' bzw. 13" kämmt mit zwei Zahnrädern 10a' bzw. 10a", die auf jeweils einem Führungsorgan 10 in der vorbeschriebenen Weise befestigt sind. Die Greifer 2' bzw. 2" sind gleich und entsprechend der ersten Ausführungsform ausgeführt. Jeweils die Greifer 2' des ersten Paares und die Greifer 2" des zweien Paares sind parallel zueinander ausgerichtet. Beim Werkzeugwechsel werden zwei Werkzeughalter 4 gleichzeitig den beiden Werkzeugspindeln 1' und 1" entnommen bzw. an sie übergeben und zwei Werkzeughalter 4 in der Magazinierposition gleichzeitig bereitgestellt.

In den dargestellten und beschriebenen Ausführungsformen wird die mit 1:1 übersetzte Drehbewegung der Führungsorgane über Zwischenräder 13 bzw. 13' bzw. 13" realisiert. Eine entsprechende gegensinnige und mit 1:1 übersetzte Drehbewegung der Führungsorgane kann auch mittels anderer geeigneter Mittel erzielt werden, beispielsweise mit Zahnriemen, die mit Zahnrädern zusammenwirken oder mit Ketten, die mit Kettenrädern zusammenwirken.

In den dargestellten Ausführungsbeispielen ist die Spindelachse 1a stets senkrecht angeordnet. Statt dessen kann die Spindelachse auch jede andere von der senkrechten Ausrichtung unterschiedliche Ausrichtung aufweisen, beispielsweise eine horizontale Ausrichtung bei horizontaler Werkzeugspindel oder eine schräg geneigte Ausrichtung bei einer geneigten Werkzeugspindel.

## Patentansprüche

1. Werkzeugmaschine mit einer um eine Spindelachse (1a) rotierend antreibbaren Werkzeugspindel (1; 1') und einem Greifer (2; 2') aufweisenden Werkzeugwechsler zum Verfahren von Werkzeughaltern (4) oder Werkzeugen zwischen einer Aufnahmeposition in der Werkzeugspindel (1; 1') und einer Magazinierposition bzw. umgekehrt, wobei die Ausrichtung der Werkzeughalter (4) oder Werkzeuge in diesen beiden Positionen gleich ist und Magazinierposition und Aufnahmeposition in Richtung der Spindelachse (1a) der Werkzeugspindel (1; 1') zueinander verschoben sind, mit einem Transportmechanismus, der ein um eine geneigt zur Spindelachse (1a) angeordnete Schwenkachse (5) angetrieben drehbares Tragelement (3; 3') aufweist, an dem die um zueinander senkrechte Achsen (6; 7) verschwenkbaren Greifer (2; 2'; 2") angelenkt sind,
**dadurch gekennzeichnet,**
**daß** am ein zentrales Antriebszahnrad (3a) aufweisenden Tragelement (3; 3') um zur Schwenkachse (5) parallele erste Achsen (8) drehbar gelagerte und gegensinnig zur Schwenkbewegung des Tragelements (3; 3') um die Schwenkachse (5) durch das Tragelement (3; 3') angetriebene Führungsorgane (10) vorgesehen sind, die um zweite Achsen (9), welche parallel zur Spindelachse (1a) verlaufen, drehbar mit jeweils einem Greifer (2; 2'; 2") verbunden sind, wobei die jeweils einen Greifer (2; 2') an dem Tragelement (3; 3') anlenkenden Achsen (6 und 7) und die ersten und zweiten Achsen (8 und 9) sich in einem Punkt schneiden.

2. Werkzeugmaschine nach Anspruch 1,
**dadurch gekennzeichnet,**
**daß** das zentrale Antriebszahnrad (3a) Teil eines Kegelradantriebs ist.

3. Werkzeugmaschine nach Anspruch 1 oder 2,
**dadurch gekennzeichnet,**
**daß** die gegensinnig zur Schwenkbewegung um die Schwenkachse (5) angetriebenen Führungsorgane (10) um die ersten Achsen (8) drehbare Zahnräder (10a; 10'; 10a") aufweisen.

4. Werkzeugmaschine nach Anspruche 3,
**dadurch gekennzeichnet,**
**daß** die Zahnräder (10a; 10'; 10a") mit einem gleich großen, zentralen, ortsfesten, undrehbaren Zahnrad (12a; 12a') gekoppelt sind.

5. Werkzeugmaschine nach Anspruche 3 oder 4,
**dadurch gekennzeichnet,**
**daß** die Kopplung der Zahnräder (10a; 10a'; 10a"; 12a; 12a') mittels Zwischenrädern (13; 13') erfolgt, die drehbar auf dem Tragelement (3; 3') gelagert sind.

6. Werkzeugmaschine nach mindestens einem der Ansprüche 1 bis 5,
**dadurch gekennzeichnet,**
**daß** die Führungsorgane (10) gekröpft ausgebildet sind.

7. Werkzeugmaschine nach mindestens einem der Ansprüche 1 bis 6,
**dadurch gekennzeichnet,**
**daß** der Werkzeugwechsler zwei einander diametral zur Schwenkachse gegenüberliegende Greifer (2) aufweist.

8. Werkzeugmaschine nach mindestens einem der Ansprüche 1 bis 7,
**dadurch gekennzeichnet,**
**daß** sie zwei um parallel zueinander verlaufende Spindelachsen (1a) rotierend antreibbare Werkzugspindeln (1'; 1") aufweist, und daß der Werkzeugwechsler vier Greifer (2'; 2") aufweist, von denen jeweils zwei gleich ausgerichtet sind.

9. Werkzeugmaschine nach mindestens einem der Ansprüche 1 bis 8,
**dadurch gekennzeichnet,**
**daß** die jeweils mit den Führungsorganen (10) der gleich ausgerichteten Greifer (2'; 2") verbundenen Zahnräder (10a; 10a'; 10a") mit einem gemeinsamen Zwischenrad (13'; 13") in Eingriff stehen.

10. Werkzeugmaschine nach Anspruch 9,
**dadurch gekennzeichnet,**
**daß** die 1:1 übersetzte gegensinnige Drehbewegung der Führungsorgane (10) auch über andere Getriebe, beispielsweise Zahnriemen oder Ketten realisiert werden kann.

## Claims

1. Machine tool with a tool spindle (1; 1') which can be driven in rotation about a spindle axis (1a), and with a tool changer having grippers (2; 2') for moving tool holders (4) or tools between a receiving position in the tool spindle (1; 1') and a storage position, and vice versa, wherein the orientation of the tool holders (4) or tools is the same in both these positions and the storage position and receiving position are displaced relative to each other in the direction of the spindle axis (1a) of the tool spindle (1; 1'), with a transport mechanism which has a rotatable support element (3; 3') driven about a swivel axis (5) arranged inclined to the spindle axis (1a) and on which the grippers (2; 2'; 2'') are attached which can swivel about axes (6;7) perpendicular to each other,
**characterised in that**
the support element (3; 3') having a central drive gearwheel (3a) is provided with guide members (10) which are mounted rotatable about first axes (8) parallel to the swivel axis (5) and driven oppositely to the swivel movement of the support element (3;3') about the swivel axis (5) through the support element (3;3'), wherein the guide members are each connected to a gripper (2; 2'; 2") to rotate about second axes (9) which run parallel to the spindle axis (1a), wherein the axes (6 and 7) connecting each one gripper (2; 2') to the support element (3; 3') intersect at one point with the first and second axes (8 and 9).

2. Machine tool according to claim 1,
**characterised in that**
the central drive gear wheel (3a) is part of a cone wheel drive.

3. Machine tool according to claim 1 or 2,
**characterised in that**
the guide members (10) driven oppositely to the swivel movement about the swivel axis (5) have gearwheels (10a; 10'; 10a'') which can rotate about the first axes (8).

4. Machine tool according to claim 3,
**characterised in that**
the gearwheels (10a; 10'; 10a'') are coupled to a similar sized central locally fixed non-rotatable gearwheel (12a; 12a').

5. Machine tool according to claim 3 or 4,
**characterised in that**
the coupling of the gearwheels (10a; 10a'; 10a''; 12a; 12a') is by means of intermediate wheels (13; 13') which are mounted rotatable on the support element (3; 3').

6. Machine tool according to at least one of claims 1 to 5,
**characterised in that**
the guide members (10) are angled.

7. Machine tool according to at least one of claims 1 to 6,
**characterised in that**
the tool changer has two grippers (2) set diametrically opposite to the swivel axis.

8. Machine tool according to at least one of claims 1 to 7,
**characterised in that**
it has two tool spindles (1'; 1") which can be driven in rotation about spindle axes (1a) which run parallel to each other, and that the tool changer has four grippers (2'; 2") of which each two are aligned in the same direction.

9. Machine tool according to at least one of claims 1 to 8,
**characterised in that**
the gearwheels (10a; 10a'; 10a'') which are each connected to the guide members (10) of the identically aligned grippers (2'; 2'') engage with a common intermediate wheel (13'; 13").

10. Machine tool according to claim 9,
**characterised in that**
the opposite rotational movement of the guide members (10) which has a 1:1 transmission ratio can also be achieved through other gear systems, by way of example toothed belts or chains.

## Revendications

1. Machine-outil avec une broche porte-outil (1; 1') pouvant être entraînée en rotation autour d'un axe de broche (1a) et avec un changeur d'outil présentant des griffes (2 ; 2'), pour conduire des porte-outils (4) ou des outils entre une position de prise en charge par la broche porte-outil (1; 1') et une position de magasinage resp. inversement, l'orientation des porte-outils (4) ou des outils dans ces deux positions étant identique, et la position de magasinage et la position de prise en charge étant décalées, l'une par rapport à l'autre, en direction de l'axe 1a de la broche porte-outil (1; 1'), avec un mécanisme de transport qui présente un élément support (3; 3') entraîné en rotation autour d'un axe de pivotement (5), disposé, incliné, vers l'axe la de la broche, élément support sur lequel les griffes (2; 2'; 2"), pivotantes autour d'axes (6,; 7) orientés perpendiculairement l'un par rapport à l'autre, sont articulées,
**caractérisée en ce que**,
sur un élément support (3; 3') présentant une roue de commande dentée, centrale (3a), des organes de guidage (10), montés en rotation autour de premiers axes (8) parallèles à l'axe de pivotement (5) et entraînés, autour de l'axe de pivotement (5), par l'élément support (3, 3'), dans le sens inverse au mouvement de pivotement dudit élément support (3 ; 3'), sont prévus, lesquels, en rotation autour de deuxièmes axes (9) parallèles à l'axe (1a) de la broche, sont reliés chacun à une griffe (2; 2'; 2"), les axes (6 et 7), articulant chacun une griffe (2 ; 2') sur l'élément support (3; 3'), et les premiers et deuxièmes axes (8 et 9) se coupent à un point.

2. Machine-outil selon la revendication 1,
**caractérisée en ce que**
la roue de commande dentée, centrale (3a) fait partie d'une commande par engrenage à roues coniques.

3. Machine-outil selon la revendication 1 ou 2,
**caractérisée en ce que**
les organes de guidage (10), entraînés inversement pour le pivotement autour de l'axe de pivotement (5), présentent des roues dentées (10a; 10'; 10a'') qui tournent autour des premiers axes (8).

4. Machine-outil selon la revendication 3,
**caractérisée en ce que** les roues dentées (10a; 10a'; 10a'') sont couplées avec une roue dentée (12a; 12a') centrale, fixe, non rotative, de même grandeur.

5. Machine-outil selon la revendication 3 ou 4,
**caractérisée en ce que**
le couplage des roues dentées (10a; 10a'; 10a"; 12a; 12a') s'effectue à l'aide de roues intermédiaires (13; 13'), qui sont montées en rotation sur l'élément support (3; 3').

6. Machine-outil selon au moins l'une des revendications 1 à 5,
**caractérisée en ce que**
les organes de guidage (10) sont conçus coudés.

7. Machine-outil selon au moins l'une des revendications 1 à 6,
**caractérisée en ce que**
le changeur d'outil présente deux griffes (2) diamétralement opposées par rapport à l'axe de pivotement.

8. Machine-outil selon au moins l'une des revendications 1 à 7,
**caractérisée en ce que**
ladite machine-outil présente deux broches porte-outil (1'; 1"), entraînées en rotation autour d'axes (1a) parallèles l'un à l'autre, et **en ce que** le changeur d'outil présente quatre griffes (2'; 2"), respectivement orientées deux à deux parallèlement.

9. Machine-outil selon au moins l'une des revendications 1 à 8,
**caractérisée en ce que**
les roues dentées (10a; 10a'; 10a"), respectivement reliées aux organes de guidage (10) des griffes présentant la même orientation, sont en prise avec une roue intermédiaire commune (13'; 13'').

10. Machine-outil selon la revendication 9,
**caractérisée en ce que**
le mouvement de rotation inverse des organes de guidage (10), transmis dans un rapport de 1:1, peut être également réalisé par l'intermédiaire d'autres engrenages, comme, par exemple, courroies crantées ou chaînes.
